# EUROPEAN PATENT APPLICATION

(11) **EP 2 293 518 A1**
(43) Date of publication of application: **09.03.2011**
(21) Application number: 10174690.7
(22) Date of filing: 31.08.2010
(51) Int. Cl.: H04L 29/08

(54) **System and method for providing region-based mobile advertising**

(30) Priority: 02.09.2009 KR 20090082635
(71) Applicant: SAMSUNG ELECTRONICS CO., LTD., Suwon-si Gyeonggi-do 442-742 (KR)
(72) Inventor: Kim, Song-Kyoo, Gyeonggi-do 442-742 (KR)
(74) Representative: Jenkins, Richard Gavin

(57) **Abstract**

Disclosed is a method for providing a region-based mobile advertising service. Before an advertisement server delivers an advertisement to a terminal, a gateway receives the advertisement from the advertisement server. The gateway is a communication network between the advertisement server and the terminal. The gateway, then delivers the advertisement from the advertisement server when it is determined, based on the current position of the terminal, that the terminal is located in a region established for the provision of an advertising service. In contrast, when the terminal is not located in the established region, then the gateway asks the terminal whether or not to receive the advertisement. The gateway then sends or interrupts the advertisement according to a response from the terminal. When the terminal undergoes roaming, then the user is informed of an additional fee due to advertisement, so that the user can be provided with an opportunity to accept or reject the advertisement.

## Description

### BACKGROUND OF THE INVENTION

### 1. Field of the Invention

The present invention relates to an apparatus and method for providing the user with a personalized and customized mobile advertising (MobAd) service. More particularly, the present invention is directed to an apparatus and method for providing advertisements relevant to a region where the user is located.

### 2. Description of the Related Art

The Open Mobile Alliance (OMA) is a group studying a standard for interworking between individual mobile solutions. The Open Mobile Alliance is currently defining various application standards for mobile games, Internet services, and the like. Especially with regard to OMA working groups, the Open Mobile Alliance Requirement (OMA REQ) Working Group and the Open Mobile Alliance Content Delivery (OMA CD) Working Group are researching a technology standard for offering a mobile advertising service (MobAd).

The mobile advertising service is a technology for delivering customized advertisements. These advertisements may be customized based on music, graphic, voice and text technologies to the users of mobile terminals (e.g. mobile phones, PDAs, netbooks, laptops, etc.) through the mobile terminal. However, despite a large number of currently available solutions supporting a mobile advertising service, each company and service provider uses their own unique software. The unique operating service thereby causes a reduction in compatibility, inoperability and reduces the spread of the mobile terminal service since it may be incompatible with a particular operating service. This can be very frustrating to advertisers to not reach certain markets. In order to solve such a problem, the OMA, a group studying a standard for mobile terminals, is currently in the course of establishing a MobAd standard for related technologies and compatibility.

Features of the mobile advertising service can be roughly summarized in the following three points. First, the mobile advertising service can build an information database for users. The database may then realize personalized advertisements suited for a distinctive feature of each individual. Since a user always carries a mobile terminal, the service provider can deliver selected advertisements to the mobile terminal and the user in a predetermined period of time (lunch time, etc.) or according to a user's request. Therefore, the advertisements through the mobile terminal can be always exposed to the user in a targeted way. Secondly, the mobile advertising service enables bidirectional interaction between the user and provider. Since the mobile advertising service can provide information on advertisements desired by a user in advance, along with associated phone numbers and Uniform Resource Locators (URLs), the user can actively access the service and get more detailed information on advertised goods and services. Thirdly, the mobile advertising service makes it possible to gauge at least one metric of a user. That is, since mobile terminals are an interactive media, it is possible to get reactions (or metrics) from users who are exposed to the advertisements. Metrics can be they like the ad or dislike the ad or purchase based on an effective ad, geography etc. Such metrics can be effectively used to analyze preferences of users. Advertisers can then review the metrics and then determine a marketing strategy.

Such mobile advertising service is roughly classified into (i) a pull communication scheme of providing advertisements as requested by the user whereby the communication is requested by the user, (ii) a push communication scheme of one-sidedly delivering a plurality of advertisements to an advertisement server, (iii) and a combination scheme of the pull and push communication schemes.

In such a mobile advertisement system, since advertisements may be delivered to the user even when the user has roamed to another distant region, an additional fee may be charged. These fees are very undesirable to the user. For this reason, there is a need to develop a method for handling an additional fee that may occur before a data network transmits a mobile advertisement system. If the user can recognize an additional fee according to the user's roaming, then it is determined whether or not a mobile advertising service is to be provided according to the user's selection. Thus, in the mobile advertisement system, it becomes possible to more smoothly and more conveniently provide the mobile advertising service that will not disturb the user. A user may be annoyed by being charged a fee to receive an advertisement, which is to be avoided. In addition, if a customized mobile advertising service can be provided based on a region where the user is located, then the user can receive more effective advertisements, and then the advertisement service provider can expect favorable reactions from the users. This will provide that the advertiser will reap increased consumer satisfaction and increased revenues attributed to more relevant advertising and more customers, thereby having a great advertising effect that is superior to the prior art.

### SUMMARY OF THE INVENTION

Accordingly, the present invention has been made to solve the above-mentioned problems occurring in the prior art and provides additional advantages, by providing an apparatus and method for providing a region-based mobile advertising service to provide the user with a convenient mobile advertising service.

Also, the present invention provides an apparatus and method for providing a region-based mobile advertising service. The region-based service provides the user with an opportunity to select whether or not to accept advertisements in the event that the user is sensitive about the fee.

In accordance with an aspect of the present invention, there is provided a method for providing a region-based mobile advertising service. The method includes receiving an advertisement (220) and Ad metadata (210), the Ad metadata (210) comprising region information (300), the region information having data on a region to which the advertisement (220) is to be provided; acquiring a location information (305) of a terminal (100); determining whether the terminal (100) is located in an area corresponding to the region information of the Ad metadata (210) using the acquired location information of the terminal (100); notifying the terminal (100) that the advertisement corresponds to an advertisement in a roaming region, the roaming region being defined as when the terminal (100) is located out of the area corresponding to the region information; and determining whether to deliver the advertisement (220).

In accordance with another aspect of the present invention, there is provided a terminal for providing a region-based mobile advertising service, the terminal comprises an advertisement engine (ad engine) (130) for, when a gateway apparatus (110) connected between the terminal (100) and an advertisement server (ad server) (120) receives an advertisement and Ad metadata (210), which comprises region information on a region to which the advertisement is to be provided, from the Ad server (120), acquiring the advertisement from the gateway apparatus (110) if the gateway apparatus (110) determines that the terminal (100) is located in an area corresponding to the region information, and receiving a notification representing that the advertisement corresponds to an advertisement in a roaming region from the gateway apparatus (110) if the gateway apparatus (110) determines that the terminal (100) is not located in the area corresponding to the region information; and an advertisement application (ad application) (150) for outputting the acquired advertisement, receiving a response to the notification from a user after outputting the notification, and delivering the response to the ad engine (130) so as to transmit the response to the gateway apparatus (110).

### BRIEF DESCRIPTION OF THE DRAWINGS

The above and other aspects, features and advantages of the present invention will be more apparent to those skilled in the art from the following detailed description taken in conjunction with the accompanying drawings, in which:
FIG. 1 is a block diagram illustrating the configuration of an OMA mobile advertisement system;
FIG. 2 is a view illustrating a structure of an advertisement message used in the present invention having a number of components;
FIG. 3 is a flow diagram illustrating a method showing a flow of messages between components in an advertisement system for providing a region-based mobile advertising service according to a first embodiment of the present invention;
FIG. 4 is a flow diagram illustrating a method illustrating a flow of messages between components in an advertisement system for providing a region-based mobile advertising service according to a second embodiment of the present invention;
FIG. 5 is a flowchart illustrating a method showing the operation of a home gateway shown in FIG. 4; and
FIG. 6 is a flowchart illustrating a method showing the operation of an Ad engine shown in FIG. 4.

### DETAILED DESCRIPTION OF THE INVENTION

Hereinafter, exemplary embodiments of the present invention will be described with reference to the accompanying drawings. In the following description, the same elements will be designated by the same reference numerals although they are shown in different drawings. For the purposes of clarity and simplicity, a detailed description of known functions and configurations incorporated herein will be omitted as it may make the subject matter of the present invention rather unclear and which are well known to those of ordinary skill in the art.

In the following description, representative embodiments of the present invention will be presented to achieve the technical tasks stated above. Although names of entities defined by the 3^{rd} Generation Partnership Project (3GPP), which is the 3^{rd} generation mobile communication standard, or by MobAd of Open Mobile Alliance (OMA) will be used in the description, these names form no limitations to the present disclosure. The 3^{rd} Generation Partnership Project (3GPP) and MobAd of Open Mobile Alliance (OMA) standards and entity names are merely illustrative of one embodiment and other formats and standards are possible and within the scope of the present disclosure. The 3^{rd} Generation Partnership Project (3GPP) and MobAd of Open Mobile Alliance (OMA) standards and entity names are not intended to limit the scope of the present invention, as the present invention is applicable to any other systems having similar technical backgrounds. Various configurations are possible and within the scope of the present disclosure.

According to an embodiment of the present invention, a method for providing region-based mobile advertisements is provided. Specifically, before an advertisement server delivers an advertisement to a terminal, a gateway (which is a communication network between the advertisement server and the terminal) receives the advertisement from the advertisement server. The gateway delivers the advertisement from the advertisement server when it is determined, based on the current position of the terminal, that the terminal is located in a region established for the provision of an advertising service. In contrast, when the terminal is not located in the established region, then the gateway asks the terminal whether or not to receive/transmit the advertisement. The gateway then provides or interrupts the advertisement according to a response from the terminal. Through the above determination, to the system provides the user of the terminal with a region-based customized mobile advertising service. In addition, when roaming occurs or when the terminal moves to a region not covered by the subscriber agreement, the user is informed of an additional fee occurring due to the advertisement. In this manner, the user can be advantageously provided with an opportunity to select or reject the advertisement wherein the ad is delivered or not delivered and the customer is charged or not charged.

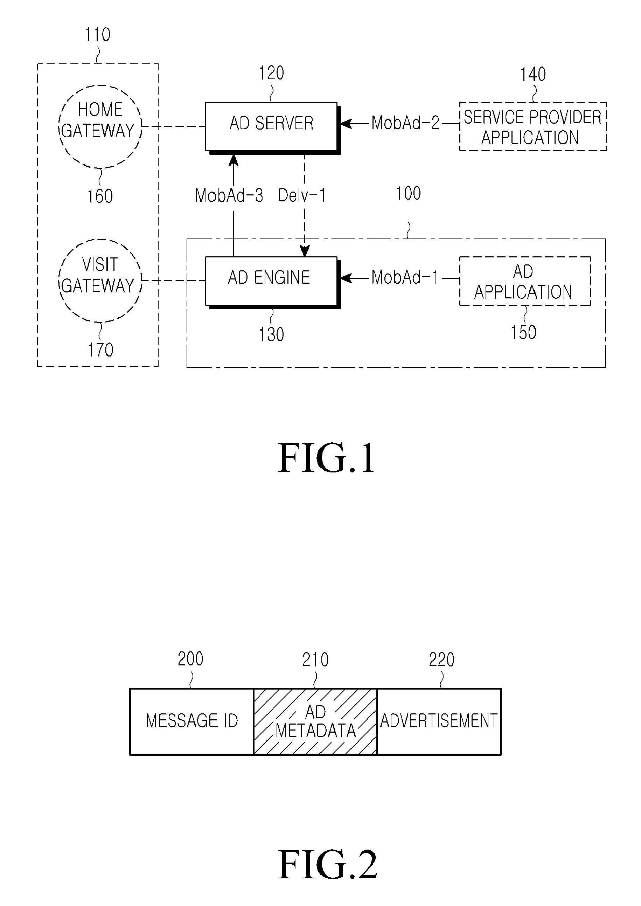

The configuration of an OMA mobile advertisement (OMA MobAd) system and the construction of an interface, to which the present invention is applied and in which the aforementioned function is implemented is described with reference to FIG. 1.

A mobile advertisement system includes an advertisement engine (Ad engine) 130 and Ad server 120, which are hardware or software components. The system also includes interfaces provided by the advertisement engine (Ad engine) 130 and the Ad server 120 components. Other components and interfaces are illustrated only for the purpose of showing an interworking relationship in the mobile advertisement system, and a detailed description thereof will be omitted as these components are well known in the art and are redundant.

The Ad engine 130, one of components of the mobile advertisement system, is located in a terminal 100, for example a mobile phone, netbook, a laptop, or a Personal Digital Assistant ("PDA") or the like. Terminal 100 may includes a processor, a memory, a bus, a display and an input device with an RF device (not shown). Various configurations are possible and within the scope of the present disclosure. The Ad engine 130 cooperates and exchanges data with an Ad application 150. The Ad application 150 is used to access the Ad server 120. The Ad engine 130 corresponds to an Ad client, and supports a useful function which enables the Ad application 150 to access a mobile advertising service.

According to an embodiment of the present invention, the Ad engine 130 acquires advertisement data from the Ad server 120 through a home gateway 160. Gateway 160 is connected between the terminal 100 and the Ad server 120. In this case, the home gateway 160 delivers the advertisement to the Ad engine 130 when determining that the terminal 100 is located in an area corresponding to the region information. The Ad engine 130 will receive an advertisement and advertisement metadata (Ad metadata) including region information about a region, to which the advertisement is desired to be provided, from the Ad server 120. If the home gateway 160 determines that the terminal 100 is not located in the area corresponding to the region information, then the home gateway 160 transmits a notification to the Ad engine 130. The notification is data that is used to inform the user that an advertisement is to be provided in a roaming region or during roaming when the user is outside the subscription area.

The Ad server 120 is a component included in the mobile advertisement system and is located on a network. The Ad server 120 provides advertisements to the Ad engine 130 and the Ad server 120 provides a service provider application 140. Especially, according to an embodiment of the present invention, when providing the terminal 100 with advertisements, the Ad server 120 uses a gateway network 110. The gateway network 110 is a communication network located generally between the Ad server 120 and the terminal 100.

The gateway network 110 roughly includes (i) the home gateway 160 and (ii) the visit gateway 170. The home gateway 160 is connected with the Ad server 120. The visit gateway 170 is connected with the terminal 100. The home gateway 160 and visit gateway 170 function as a media of a communication network between the Ad server 120 and the terminal 100 and various networking embodiments are possible and within the scope of the present disclosure.

According to an embodiment of the present invention, the following description will be given about an embodiment where an operation is performed by the home gateway 160. The operation determines whether there is a regional restriction in order to provide a region-based mobile advertising service being performed by the home gateway 160. The gateway network 110 includes, for example, (i) a general data network using a WAP Push Proxy Gateway (WAP PPG), (ii) an IP Multimedia Subsystem (IMS) network using a SIP Push Gateway, (iii) a Dynamic Contents Delivery (DCD) network including a DCD server and a DCD client, and (iv) a Broadcast (BCAST) network including a BCAST server and a BCAST client or another gateway network 110 known in the art or known in the future. Various configurations are possible and within the scope of the present disclosure to transmit data from Ad server element 120 to Ad engine element 130. The types of the communication networks are not limited to the aforementioned networks, all types of communication networks capable of acquiring location information of the terminal 100 can be used.

In order to provide the region-based mobile advertising service, the home gateway 160 receives an advertisement and Ad metadata 210 from Ad server 120. The advertisement 220 and Ad meta data 210 is preferably in a format as shown in FIG. 2. The advertisement 220 and Ad meta data 210 is from the Ad server 120, and it is then determined whether or not to deliver the received advertisement 220 and Ad metadata 210 to the terminal 100 through the visit gateway 170 depending on whether or not there is a regional restriction. The home gateway 160 uses regional code information for providing the mobile advertising service and location information of the terminal 100.for determining if a region corresponds to a region where the mobile advertising service can be provided. The regional code information is included in the Ad metadata 210 of FIG. 2, which is received from the Ad server 120.

Referring to FIG. 2, an Ad message includes a message ID field 200, an Ad metadata field 210 and an advertisement field 220. The actual advertisement data is inserted in advertisement field 220. In the message ID field 200, an AD application ID is set for delivering an advertisement. The Ad metadata field 210 is used to deliver region information on a region where advertisements are to be provided.

Meanwhile, the Ad metadata field 210 includes a region information on a region where advertisements are to be provided. In one embodiment, the Ad metadata field 210 may have a structure as illustrated in Table 1, but the present invention is not limited to the embodiment shown and may have a different format.

**Table 1**

| Element | Req | Type | Description |
|---|---|---|---|
| Regional Code | Mandatory or Blank | 2 digit decimal (call number) or 2 byte char. (DNS) | • Regional (country) code for Ad source • Regional information for destination (call number or DNS) (ex. call number: 49→Germany, 82→Korea, ... DNS: de→Germany, kr→Korea, jp→Japan, ...) • Special code for wildcard |
| | | | →ZZ(DNS), 99(call number) or Blank: No regional restriction |
| Ad ID | Mandatory | String | Unique identifier of the specific advertisement requested |
| Format | Mandatory | String | Identifies the associated Ad format |
| Type | Mandatory | String | Indicates the type of the Ad (e.g. banner) |
| Expiration Date, Keyword Targeted Audience | Optional | String | Optional Metadata that can be added after Mandatory requirements |

As shown in Table 1, a "Regional Code" is used as region information. The Region code indicates whether or not an advertisement is to be delivered and is determined depending on regional code information set in the "Regional Code." Referring to Table 1, the "Regional Code" is set with a 2-digit decimal number or 2-byte character. The 2-digit decimal number represents a regional code, a country code, or other region information on a destination region. For example, when a 'call number" is set to "82," it represents that a region to which an advertisement is to be provided is Korea (country code). The 2-byte character represents a region or country name. For example, when a "DNS" is set to "kr," it represents that a region to which an advertisement is to be provided is Korea. Therefore, when the Ad server 120 provides advertisements to the terminal 100 located in Korea, then the Ad server 120 sets the "Regional code" of the Ad metadata field 210 to "82" or "kr." Therefore, when the Ad server 120 provides advertisements to the terminal 100 located in a different country, the Ad server 120 sets the "Regional code" of the Ad metadata field 210 to the relevant data for the specific country.

Otherwise, instead of a code or name representing a specific region or country, the information representing that advertisements are to be provided may be set in the "Regional Code" regardless of region, For example, when the "Regional Code" is set to "ZZ" or "99," or is left blank, this data represents that advertisements are to be provided to the terminal 100 regardless of the location of the terminal 100. Such regional code information set in the "Regional Code," may be determined, for example, by an advertisement service provider or a content provider. Such regional code information set in the "Regional Code," may be provided (i) when the advertisement service provider wants to provide strategic advertisements promoted in a specified region, or (ii) when the advertisement service provider wants to provide advertisements specialized in the specified region. Otherwise, regional code information may include information on a region where the terminal 100 is authorized and allows receiving advertisements in advance.

In the above description, a structure of Ad metadata 210 is provided. The Ad metadata provides regional code information required for providing the region-based mobile advertising service and has been briefly explained. A method and procedure for providing advertisements when criteria set in the Ad metadata are satisfied will be described in detail for clear illustration in addition to the method and the procedure for providing advertisements in a specific region. Accordingly, although a call number, a domain name system (DNS), etc. are described as an example, the present invention is not limited to a call number or DNS number and the present disclosure envisions any and all types of information enabling distinction between regions known in the art or known in the future. Various data can be used to provide an indication of a region.

Meanwhile, location information on the region that the terminal 100 is located is managed by the home gateway 160. The home gateway 160 is preferably a gateway that the terminal 100 is registered. In addition, even when the terminal 100 is removed from the home gateway 160 and is located in the coverage of another visit gateway 170, then the home gateway 160 can identify location information of the terminal 100. This is accomplished through the use of data of the visit gateway 170. Also, the home gateway 160 may identify location information of the terminal 100. This identification can be based on the IP address of the terminal 100 or the like. Also, similarly to regional code information provided by the Ad server 120, the location information of the terminal 100 may have the form of a "call number" or "DNS." As described above, the home gateway 160 can acquire location information of the terminal 100 in various schemes, but the present invention is not limited thereto and may acquire in any suitable method known in the art.

As described above, the home gateway 160 compares current location information of the terminal 100 with regional code information transmitted from the Ad server 120. The home gateway 160 then delivers a region-based mobile advertising service to the terminal 100 according to a result of the comparison. A procedure of comparing location information with regional code information and determining whether or not to provide an advertisement service will be described in detail later.

The Ad application 150 is an external entity which is executed at the terminal 100. The Ad application 150 is used to send an advertisement request to the Ad engine 130. The Ad Application 150 and the Ad engine 130 are both included in the same terminal 100. The Ad Application 150 receives an advertisement from the Ad engine 130. The Ad Application 150 also displays the received advertisement to the user, and provides a result of an interworking of the advertisement to the Ad engine 130. The Ad application 150 includes, for example, a messaging client, a web browser, a gaming client, etc. According to an embodiment of the present invention, the Ad application 150 outputs an advertisement acquired from the Ad engine 130. The Ad Application 150 also displays the advertisement to the user. Also, when receiving a notification providing an indication that an advertisement is to be provided during roaming, from the Ad engine 130, then the Ad application 150 then outputs the notification. The Ad application 150 preferably informs the user of the notification. The Ad application 150 preferably receives a response to the notification from the user, and the Ad application 150 preferably transfers the response to the Ad engine 130. The Ad engine 130 then transmits the response to the home gateway 160. The service provider application 140 is an external entity. The service provider application 140 is used to send an advertisement request to the Ad server 120 so the Ad server 120 receives an advertisement and displays the received advertisement, together with contents, to the user. The service provider application 140 also provides a result of an interworking of the advertisement to the Ad server 120. The service provider application 140 includes, for example, a web portal, a multimedia service (MMS) relay/server, a short message service center (SMSC), a gaming server, etc.

Hereinafter, the embodiments of the present invention stated in the detailed description will be described as follows. A first embodiment of the present invention will be described about a case of unconditionally interrupting an advertisement provision. This occurs when the terminal 100 is located in a region in which reception of advertisements is not accepted by the terminal 100. A second embodiment of the present invention will be described about a case when the terminal 100 is located in a region in which reception of advertisements is not accepted by the terminal 100 and the non acceptance is notified to the user of the terminal 100. The present disclosure then provides the user with the function of interrupting advertisements depending on an advertisement acceptance request or an advertisement interruption request that is issued from the terminal 100 depending on the preference of the user.

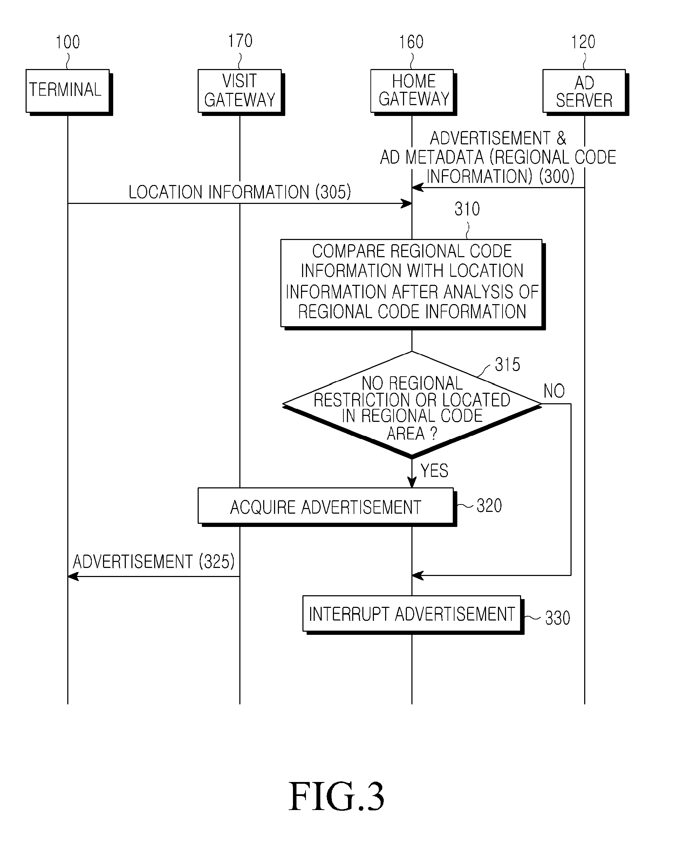

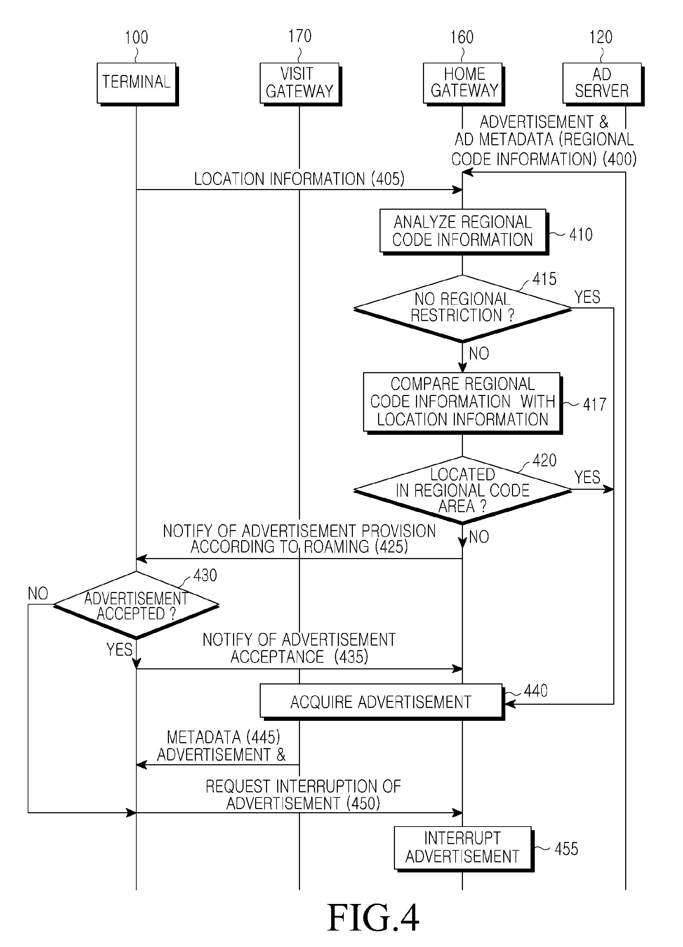

First, a method for providing a region-based mobile advertising service according to the first embodiment of the present invention will be described with reference to FIG. 3. In the following description and FIGS. 3 and 4, although the subject of acquiring an actual advertisement is the Ad engine 130 located in the terminal 100, the terminal 100 will be described as the subject for the ease and convenience of description.

Referring to FIG. 3, at step 300, the Ad server 120 transmits an advertisement 220 and Ad metadata 210. The Ad metadata 210 and Advertisement 220 have a structure as shown in FIG. 2. The Ad metadata 210 and Advertisement 220 are communicated from the Ad Server 120 to the home gateway 160. In this case, in order to provide a region-based mobile advertising service, the Ad metadata 210 comprises regional code information. Then, the home gateway 160 acquires location information in step 305 in order to identify the current location of the terminal 100. Such location information may be a call number or a DNS, similarly to the regional code information or other data. Next, the home gateway 160 analyzes the regional code information. The home gateway 160 then compares the location information with the regional code information in step 310. Then, in step 315, the home gateway 160 shows "no regional restriction," or a determination is reached. The home gateway 160 determines if the terminal 100 is located in an area (hereinafter, referred to as a "regional code area") that is a regional code area that corresponds to the regional code information.

Specifically, it is determined if the regional code information represents that the advertisement has no regional restriction. This is determined by analyzing the regional code information. When the regional code information is set to "ZZ," or is left blank, as described with reference to Table 1, it represents that there is no regional restriction. This means that the advertisement should be delivered to the terminal 100 regardless of region. For example, when an advertisement service provider provides an advertisement although an additional advertisement provision fee is caused by roaming then this corresponds to the case of "no regional restriction." Also, when it is determined that the current location information of the terminal 100 corresponds to the regional code information then the advertisement can be delivered to the terminal 100. This is a result of a comparison between the analyzed regional code information and the location information.

Accordingly, when the regional code information represents that there is no regional restriction, or when the terminal 100 is currently located in the regional code area, the visit gateway 170 acquires the advertisement from the home gateway 160 in step 320. The visit gateway 170 then delivers the acquired advertisement to the terminal 100 in step 325. In contrast, when the regional code information does not represent that there is no regional restriction, and when the terminal 100 is not located in the regional code area, then the home gateway 160 unconditionally interrupts advertisements. This interruption is the delivery from the Ad server 120 to the terminal 100 in step 330. Through this, the user can be provided with a mobile advertising service for a specific region when the user is located in the specific region. Further, the advertisement delivery is interrupted when the user is not located in the regional code area due to roaming (outside the subscription area) or the like. In this manner, it is possible to prevent the occurrence of an additional advertisement receiving fee in advance of the advertisement.

Meanwhile, while the above description has been given about the case where advertisement delivery is interrupted whenever roaming occurs in order to prevent an additional fee it is preferred to inquire of the user about his/her intention. This is in the favor of users who desire to acquire advertisements even in a roaming region when roaming occurs and who do not care too much about the fee. Therefore, in consideration of this desire, the second embodiment of the present invention proposes a procedure for enabling the user of the terminal 100 to determine whether or not to receive an advertisement when the current location of the terminal 100 is different from a region where the Ad server 120 desires to provide the advertisement to provide additional functionality to the user and convenience.

The operations performed in steps 400 and 405 of FIG. 4 are similar as those in steps 300 and 305 of FIG. 3, so a detailed description thereof will be omitted. The home gateway 160 analyzes regional code information in step 410. The home gateway 160 determines if the regional code information represents "no regional restriction" in step 415. When the regional code information represents "no regional restriction," this means that an advertisement can be delivered regardless of region. The method proceeds to step 440, where the visit gateway 170 acquires the advertisement from the home gateway 160. Next, in step 445, the visit gateway 170 delivers the acquired advertisement to the terminal 100. This is done together with metadata required for executing the advertisement.

In contrast, when it is determined in step 415 that the regional code information does not represent "no regional restriction," that is, when the regional code information is set to a value representing a specific region, then the home gateway 160 compares the regional code information with location information in step 417. Then, in step 420 a determination is reached and the home gateway 160 determines if the terminal 100 is currently located in the corresponding regional code area as a result of the comparison. When the terminal 100 is located in the corresponding regional code area, then the method proceeds to step 440. In contrast, when the terminal 100 is not located in the corresponding regional code area, then the method proceeds to step 425, where the home gateway 160 notifies the terminal 100 that the advertisement is to be provided during roaming.

Then, the terminal 100 receives the notification. Terminal 100 informs the user of the contents of the notification. The user can recognize that an additional fee is charged upon receiving the advertisement. In this case, the user of the terminal 100 can accept or reject receiving the advertisement. Therefore, the terminal 100 determines if the advertisement has been accepted by the user at step 430.

When the advertisement has been accepted as a result of the determination at step 430, then the method proceeds to step 435, where the terminal 100 informs the home gateway 160 that the advertisement has been accepted. Then, the method proceeds to step 440, where the visit gateway 170 acquires the advertisement from the home gateway 160. Next, in step 445, the visit gateway 170 delivers the acquired advertisement 220 to the terminal 100, together with metadata 210 required for executing the advertisement 220. In this case, the metadata 210 may further optionally include billing information on a fee caused by roaming.

In contrast, a user sensitive about an additional fee caused by roaming may reject receiving the advertisement. Accordingly, when the user does not accept receipt of the advertisement, then the terminal 100 may request that the advertisement be interrupted in step 450. When receiving an advertisement interruption request, the home gateway 160 then interrupts the advertisement in step 455. Then, the advertisement cannot be delivered from the Ad server 120 to the terminal 100 and no fee is charged.

For example, when the user of the terminal 100 has accepted receiving advertisements in Korea, or when an advertisement service provider is to provide an advertisement to a terminal 100 located in Korea, then regional code information representing Korea is included in the Ad metadata that is delivered to the terminal 100. In this case, the home gateway 160 compares location information of the terminal 100 with the regional code information. Then the advertisement is directly delivered when it is determined that the terminal 100 is located in Korea as a result of the comparison.

In contrast, when it is determined that the terminal 100 is currently located in Germany, then delivering the advertisement generates a roaming fee according to the advertisement delivery attributed to the service or the subscription. Furthermore, in a case even where an advertisement service provider does not pay an advertisement fee according to roaming, it is possible that the user of the terminal 100 wants to receive the advertisement even in Germany while bearing expenses due to the roaming as the user may be interested or curious. Therefore, according to the second embodiment of the present invention, when the user is located in a roaming region, the user is notified of an additional fee even before the advertisement is pushed to the terminal 100. Accordingly, the user can easily handle and bear an unnecessary fee although the user has sent a subscription to an advertisement, and the advertisement service provider can smoothly provide advertisements to the users who are sensitive about an additional fee and will accept the fee.

Meanwhile, differently from the aforementioned embodiments, the terminal 100 may be set not to receive an advertisement unconditionally upon roaming. This may occur by transmitting an interruption message to the home gateway 160 in advance. In this case, only when regional code information that has Ad metadata which represents "no regional restriction," then a corresponding advertisement is delivered to the terminal 100.

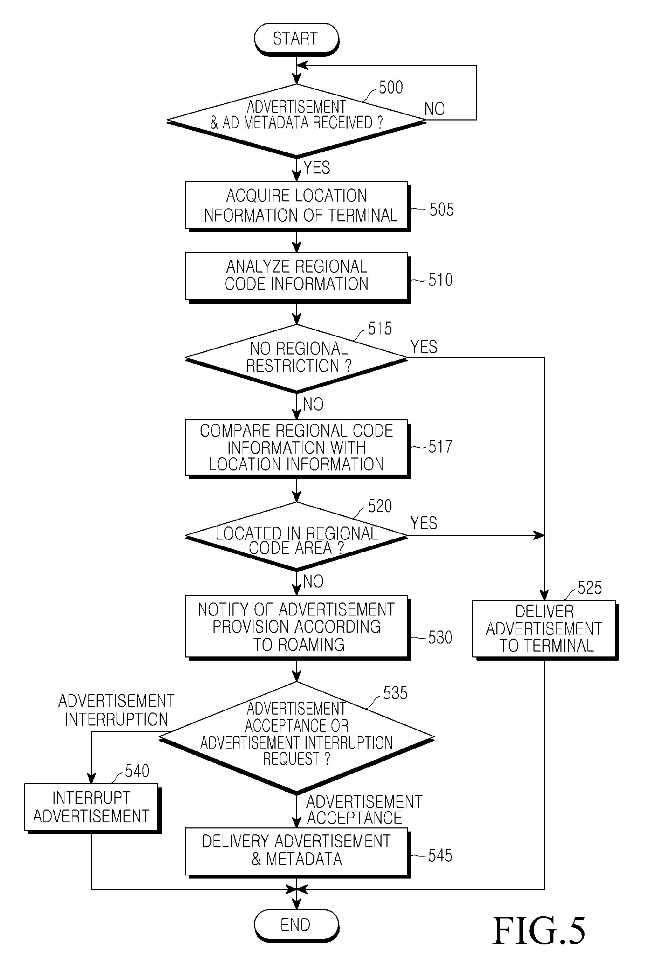

Meanwhile, the operation of the home gateway 160 in FIG. 4 will now be described in detail with reference to FIG. 5.

Referring to FIG. 5, when the home gateway 160 receives an advertisement 220 and Ad metadata 210 from the Ad server 120 in step 500, then the home gateway 160 acquires location information of the terminal 100. The location information of the terminal is an object which is acquired and which the advertisement is delivered, in step 505. Then, the home gateway 160 analyzes regional code information in step 510. The home gateway 160 then determines if a result of the analysis shows "no regional restriction" in step 515. When the result of the analysis shows "no regional restriction," then the home gateway 160 delivers the advertisement to the terminal 100 in step 525. That is, even though an additional fee occurs due to roaming, the advertisement is delivered to the terminal 100.

In contrast, when it is determined in step 515 that the result of the decision does not show "no regional restriction," then the home gateway 160 performs step 517, where the home gateway 160 compares the regional code information with the location information. Then, it is determined in step 520 that the terminal 100 is located in a regional code area as a result of the comparison. Meaning the current location of the terminal 100 is located in the regional code area. When the current location is located in the regional code area, then the home gateway 160 performs step 525. At step 525, the home gateway 160 delivers the advertisement to the terminal 100. In contrast, when the terminal 100 is located in a different area, other than the regional code area, then the home gateway 160 notifies the terminal 100 that an advertisement is to be provided according to roaming in step 530. The user is notified in advance that an additional fee occurs when the terminal 100 receives the advertisement. The home gateway 160 determines whether an advertisement acceptance or an advertisement interruption request is received from the terminal 100. This is performed in response to the notification in step 535. When receiving an advertisement interruption request, then the home gateway 160 interrupts the advertisement in step 540. In contrast, when receiving an advertisement acceptance, then the home gateway 160 delivers the advertisement 220 and metadata 210 required for executing the advertisement to the terminal 100 in step 545. Thereafter, the method ends.

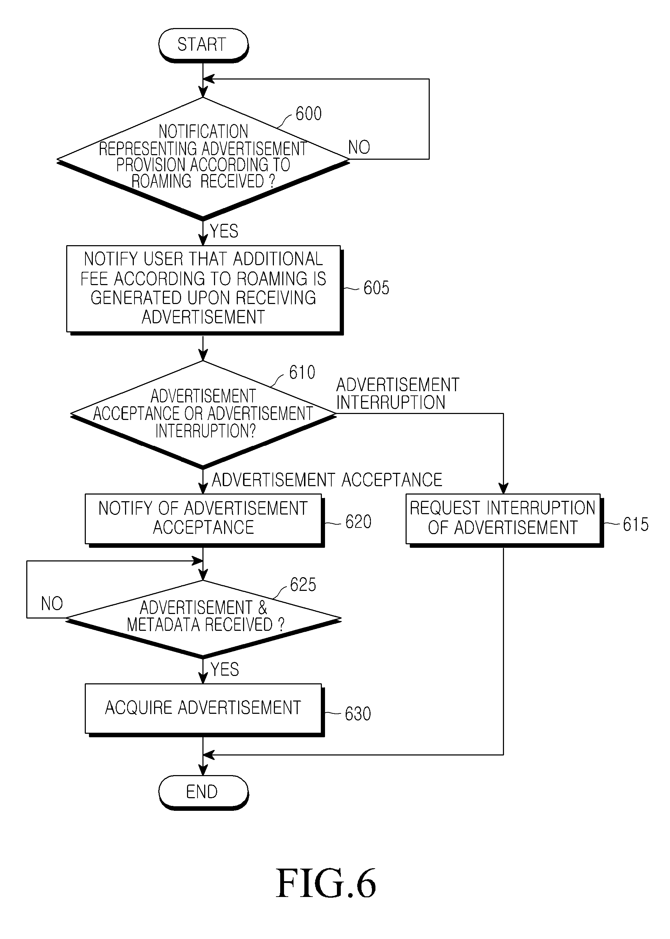

Meanwhile, the operation of the terminal 100 in FIG. 4 will now be described in detail with reference to FIG. 6.

Referring to FIG. 6, at step 600, the terminal 100 determines if a notification of an advertisement provision according to roaming is received from the home gateway 160 (which connects the terminal 100 with the Ad server 120). Such a notification function is to notify that the terminal 100 is located in a roaming region. This notification is provided while an advertisement is to be provided to the terminal 100 in the roaming region. When receiving the notification, the terminal 100 informs the user that receiving the advertisement generates an additional fee according to roaming in step 605. For example, the terminal 100 may display the type of the advertisement to be provided and additional data, together with a fee according to roaming, on the screen of the terminal 100. The user sees the displayed information, and the user then can determine whether to accept or reject receiving the advertisement. Accordingly, the terminal 100 determines whether an advertisement acceptance signal or an advertisement interruption signal is input in step 610. When receiving the advertisement acceptance signal, the terminal 100 informs the home gateway 160 of advertisement acceptance in step 620. Then, the advertisement is acquired from the home gateway 160. Accordingly, when receiving the advertisement and metadata in step 625, then the terminal 100 acquires the advertisement. The advertisement is provided from the home gateway 160 and through the visit gateway 170 in step 630.

In contrast, when receiving the advertisement interruption signal, then the terminal 100 requests the home gateway 160 interrupt the advertisement in step 615. In this manner, the home gateway 160 does not deliver the advertisement. Through this, the user can recognize an additional fee according to the user's roaming. Also, it is determined whether or not a mobile advertising service is to be provided according to the user's selection. Thus, it is possible to more conveniently provide the mobile advertising service. In addition, since a customized mobile advertising service is provided based on a region where the user is located, the user can be provided with more effective advertisements. Also, the advertisement service provider can expect improved beneficial reactions from the users, thereby having a great advertising effect and create a viral effect and increased marketing of the products.

According to the embodiments of the present invention, since advertisements are provided based on regions where each user is located, it is possible to increase the advertising effect of ads and increased marketing of the products. Also, according to the embodiments of the present invention, when a roaming event occurs, the user is notified that an additional fee is going to be levied and generated, so that a choice and an opportunity of selecting advertisements is provided to the user. In addition, according to the embodiments of the present invention, since a gateway between an Ad client and an Ad server handles advertisements, it is possible to provide a region-based advertising service. This occurs regardless of a communication network which provides the advertisements.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While the invention has been shown and described with reference to certain exemplary embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A method for providing a region-based mobile advertising service **characterized in that:**
receiving an advertisement (220) and Ad metadata (210), the Ad metadata (210) comprising region information (300), the region information having data on a region to which the advertisement (220) is to be provided;
acquiring a location information (305) of a terminal (100);
determining whether the terminal (100) is located in an area corresponding to the region information of the Ad metadata (210) using the acquired location information of the terminal (100);
notifying the terminal (100) that the advertisement corresponds to an advertisement in a roaming region, the roaming region being defined as when the terminal (100) is located out of the area corresponding to the region information; and
determining whether to deliver the advertisement (220).

2. The method as claimed in claim 1, wherein the region information is selected from the group consisting of a call number, a domain name system (DNS), and regional restriction information representing that there is no regional restriction.

3. The method as claimed in claim 2, further including:
determining after receiving the advertisement (220) and the Ad metadata (210) if the region information corresponds to regional restriction information; and
when the region information does not correspond to the regional restriction information comparing the acquired location information with the region information.

4. The method as claimed in claim 3, further including determining that the terminal (100) is located in the area corresponding to the region information from the comparison.

5. The method as claimed in claim 3, further including delivering the advertisement (220) to the terminal (100) when the region information corresponds to the regional restriction information.

6. The method as claimed in claim 1, further including delivering the advertisement (220) to the terminal (100) when the terminal (100) is located in the area corresponding to the region information.

7. The method as claimed in claim 1, further including providing a notification at the terminal (100) that an additional fee is generated if the advertisement (200) is determined to be received.

8. The method as claimed in claim 1, further including interrupting (330) the advertisement (200) so that the advertisement (200) is not delivered.

9. The method as claimed in claim 1, further including delivering the advertisement (200) and the Ad metadata (210) to the terminal (100) when the advertisement (200) is accepted, wherein the Ad metadata (210) comprises billing information, the billing information being generated when the advertisement (200) is received by the terminal (100).

10. The method as claimed in claim 1, wherein the method for providing the region-based mobile advertising service is provided by a gateway apparatus (110), and wherein the gateway apparatus (110) corresponds to a communication-network gateway apparatus capable of acquiring location information of the terminal, and wherein the communication-network gateway apparatus is selected from the group consisting of a data network using a WAP Push Proxy Gateway (WAP PPG), an IP Multimedia Subsystem (IMS) network, a Dynamic Contents Delivery (DCD) network, and a Broadcast (BCAST) network.

11. A terminal (100) for providing a region-based mobile advertising service, the terminal comprising:
an advertisement engine (ad engine) (130) for, when a gateway apparatus (110) connected between the terminal (100) and an advertisement server (ad server) (120) receives an advertisement and Ad metadata (210), which comprises region information on a region to which the advertisement is to be provided, from the Ad server (120), acquiring the advertisement from the gateway apparatus (110) if the gateway apparatus (110) determines that the terminal (100) is located in an area corresponding to the region information, and receiving a notification representing that the advertisement corresponds to an advertisement in a roaming region from the gateway apparatus (110) if the gateway apparatus (110) determines that the terminal (100) is not located in the area corresponding to the region information; and
an advertisement application (ad application) (150) for outputting the acquired advertisement, receiving a response to the notification from a user after outputting the notification, and delivering the response to the ad engine (130) so as to transmit the response to the gateway apparatus (110).

12. The terminal of claim 11, wherein the area is determined using a location information of the terminal (100).

13. The terminal of claim 11, wherein acceptance is input by the user through the ad application (150), the ad engine (130) notifies the gateway apparatus (110) of the acceptance, and acquires the advertisement (220) provided by the ad server (120) from the gateway apparatus (110) according to the advertisement acceptance.

14. The terminal of claim 11, wherein, when an advertisement interruption request is input by the user through the ad application in response to the received notification, the ad engine (130) requests the gateway apparatus (110) to interrupt the advertisement (220).

15. The terminal of claim 11, wherein the gateway apparatus (110) corresponds to a communication-network gateway apparatus capable of acquiring location information of the terminal (100), and wherein the gateway apparatus (110) is selected from the group consisting of a data network using a WAP Push Proxy Gateway (WAP PPG), an IP Multimedia Subsystem (IMS) network, a Dynamic Contents Delivery (DCD) network, and a Broadcast (BCAST) network.
